# EUROPÄISCHE PATENTSCHRIFT

(11) **EP 3 966 003 B1**
(45) Veröffentlichungstag und Bekanntmachung des Hinweises auf die Patenterteilung: **12.03.2025**
(21) Anmeldenummer: 20729617.9
(22) Anmeldetag: 30.04.2020
(51) Int. Cl.: B26B 13/26, B26D 3/16, A01G 3/02

(54) **HANDBETÄTIGTE SCHNEIDVORRICHTUNG MIT RATSCHENMECHANISMUS**
MANUALLY OPERATED CUTTING DEVICE HAVING A RATCHET MECHANISM
DISPOSITIF DE COUPE À COMMANDE MANUELLE AVEC MÉCANISME À CLIQUET

(30) Priorität: 10.05.2019 DE 102019112315; 10.05.2019 DE 102019112326
(43) Veröffentlichungstag der Anmeldung: 16.03.2022
(73) Patentinhaber: Rothenberger AG, 65779 Kelkheim (DE)
(72) Erfinder: HESSE, Dennis, 60439 Frankfurt (DE); GOTTSCHALK, Maximilian, 65199 Wiesbaden (DE); SCHILLING, Jonas, 65929 Frankfurt (DE)
(86) Internationale Anmeldenummer: PCT/DE2020/100361
(87) Internationale Veröffentlichungsnummer: WO 2020/228896

(56) Entgegenhaltungen:
- DE-A1- 102009 019 989
- US-A1- 2010 139 100
- US-A1- 2017 215 346

## Beschreibung

Die Erfindung betrifft eine Schneidvorrichtung zum spanlosen Schneiden von Schneidgut. Die Erfindung betrifft ferner ein Verfahren zum spanlosen Schneiden von Schneidgut.

Aus dem Produktkatalog 2012/2013 "Rothenberger - pipetool technologies at work" der Rothenberger Werkzeuge GmbH, Kelkheim, Seiten 20 und 21 ist eine handbetätigte Schneidvorrichtung zum spanlosen Schneiden von Schneidgut bekannt. Die Schneidvorrichtung dient dort zum Ablängen von Kunststoffrohren oder Mehrschicht-Verbundrohren, welche beispielsweise im Heizungs- und/oder Sanitärbereich verbaut werden. Die Schneidvorrichtung ist eingerichtet, eine relativ hohe Schneidkraft bereitzustellen. Dazu weist die Schneidvorrichtung eine Ratschenfunktion auf, welche eine Vorschubbewegung der Schneide in mehrere Betätigungsbewegungen des Handhebels der Schneidvorrichtung unterteilt.

Ferner offenbart für eine handbetätigbare Schere mit einem Ratschenmechanismus die Druckschrift DE 10 2009 019989 A1 den Vorschlag, ein zusätzliches Sperrglied vorzusehen, welches den Ratschenmechanismus umgeht und damit die Schere in einem Direktschnittmodus, bei welchem ein einziger Schließvorgang der Griffhebel auch ein vollständiges Schließen der Schneidenanordnung bewirkt, betreiben zu können.

Ferner offenbart die Druckschrift US20170215346 ein Schneidwerkzeug, das aus einem ersten Bauteil und einem zweiten Bauteil besteht, die schwenkbar miteinander verbunden sind; wobei mit dem zweiten Bauteil eine Steuervorrichtung schwenkbar verbunden ist. Das Schneidwerkzeug führt einen
mehrstufigen oder einmaligen Schnitt aus, je nachdem, ob die Steuervorrichtung in die gewünschte Position geschoben wird oder nicht, wobei sich das erste und das zweite Bauteil unter der Kontrolle der Steuervorrichtung einander annähern oder voneinander entfernen.

Eine Aufgabe der Erfindung ist es, wenigstens eine Möglichkeit vorzuschlagen, um das bisherige Konzept für ein spanloses Schneiden von Schneidgut zu optimieren.

Die Aufgabe wird mit einer Schneidvorrichtung gelöst, welche die Merkmale des Anspruches 1 aufweist. Zur Lösung der Ausgabe werden ferner ein Verfahren mit den Merkmalen des Anspruches 11 und ein Verfahren mit den Merkmalen des Anspruches 12 vorgeschlagen. Darüber hinaus wird eine Verwendung mit den Merkmalen des Anspruches 13 vorgeschlagen. Vorteilhafte Ausführungsformen und/oder Ausgestaltungen und/oder Aspekte der Erfindung ergeben sich aus den Unteransprüchen, der nachfolgenden Beschreibung und den Figuren.

Eine grundlegende Schneidvorrichtung zum spanlosen Schneiden von Schneidgut umfasst ein, eine Schneide aufweisendes Schneidteil und ein als Auflager für das Schneidgut nutzbares Stützteil. Das Schneidteil und das Stützteil sind um eine Drehachse gegeneinander drehbar gelagert und eingerichtet, zwischen einer Offenstellung und einer Schließstellung relativ zueinander um die Drehachse gedreht zu werden. Insbesondere ist das Schneidteil relativ gegenüber dem Stützteil zwischen der Offenstellung und der Schließstellung zu bewegen. Beispielsweise weist das Stützteil einen Stützabschnitt bzw. Auflageabschnitt für das Schneidgut auf. Der Stützabschnitt kann ein Bestandteil eines Gegenhalters oder Amboss sein. Auch kann der Stützabschnitt eine eigene Schneide aufweisen oder ausbilden.

Unter der Bezeichnung "Offenstellung" ist in der vorliegenden Beschreibung insbesondere eine solche geöffnete Stellung des Schneidteiles gegenüber dem Stützteil zu verstehen, dass dazwischen das zu schneidende Schneidgut aufgenommen werden kann, um es dann im Zuge eines Schneidvorganges, also durch Bewegen des Schneidteiles bzw. seiner Schneide in Richtung gegen das Stützteil zu schneiden. Unter der Bezeichnung "Schließstellung" ist in der vorliegenden Beschreibung insbesondere eine solche Stellung zu verstehen, welche das Schneidteil gegenüber dem Stützteil einnimmt, wenn der Schneidvorgang ausgeführt ist und beispielsweise das Schneidgut durchtrennt ist.

In der Schließstellung kann die Schneide des Schneidteiles bis an das Stützteil bzw. seiner Auflagerfläche für das Schneidgut oder bis über das Stützteil bzw. seiner Auflagerfläche hinaus bewegt sein, so dass zwischen der Schneide und dem Stützteil in Richtung der Drehachse gesehen, kein Abstand vorliegt. Auch kann in der Schließstellung, in. Richtung der Drehachse gesehen, zwischen dem Schneidteil bzw. der Schneide und dem Stützteil bzw. seiner Auflagerfläche noch ein Spalt, insbesondere geringer Spalt vorliegen.

Die Schneidvorrichtung umfasst ferner einen Handhebel und einen Ratschenmechanismus. Der Handhebel ist um eine Schwenkachse schwenkbar an dem Stützteil angelenkt. Der Ratschenmechanismus ist eingerichtet, eine Hin- und Herbewegung des Handhebels um die Schwenkachse in eine kontinuierliche Drehbewegung des Schneidteiles in Richtung der Schließstellung umzuwandeln, und weist eine Verzahnung und eine damit in Wirkstellung bringbare Antriebsklinke auf, um darüber eine Kraftübertragung von dem Handhebel auf das Schneidteil zu bewirken. Die Antriebsklinke kann an dem Handhebel drehbar gelagert sein, insbesondere direkt oder über ein Zwischenelement an dem Handhebel drehbar gelagert sein. Durch den Ratschenmechanismus ist ein Schneiden von solchem Schneidgut mittels Handkraft begünstigt, welches eine relativ große Schneidkraft erfordert, um geschnitten zu werden.

Weiterhin umfasst die Schneidvorrichtung einen Koppelmechanismus, welcher eingerichtet ist, eine einmalige Schwenkbewegung des Handhebels um die Schwenkachse in eine Drehbewegung des Schneidteiles von der Offenstellung in die Schließstellung
umzuwandeln. Durch den Koppelmechanismus ist ein Direktschnitt des Schneidgutes ermöglicht, das heißt, es kann mit einer einmaligen Betätigung des Handhebels das Schneidgut geschnitten, insbesondere durchtrennt werden. Aufgrund der lediglich nur einmal auszuführenden Betätigung des Handhebels ist ein zeitlich relativ schnelles Schneiden des Schneidgutes, insbesondere Durchtrennen des Schneidgutes begünstigt.

Ferner weist der Koppelmechanismus ein separates Koppelelement auf, um darüber eine Kraftübertragung von dem Handhebel auf das Schneidteil zu bewirken. Dadurch ist es möglich, den Koppelmechanismus zu realisieren, ohne dazu auf Bauteile des Ratschenmechanismus, wie beispielsweise die Antriebsklinke und/oder die Verzahnung zurückzugreifen. Vielmehr ist das Koppelelement als ein separates Übertragungsglied vorgesehen, um eine triebmäßige Verbindung zwischen dem Handhebel und dem Schneidteil, insbesondere eine direkte triebmäßige Verbindung zwischen dem Handhebel und dem Schneidteil zu bewirken. Bei einer bestehenden Schneidvorrichtung mit Ratschenmechanismus ist eine Erweiterung um den Koppelmechanismus erleichtert, da der Ratschenmechanismus unverändert bleiben kann und zur Kraftübertragung beispielsweise lediglich das Koppelelement zu ergänzen ist.

Bei einer weiteren Ausführungsform ist die Schneidvorrichtung dazu eingerichtet, dass bei der Kraftübertragung über das Koppelelement die Antriebsklinke in Wirkstellung gegen die Verzahnung vorliegt und sich in einem Freilaufbetrieb befindet. Unter dem "Freilaufbetrieb" ist dabei insbesondere zu verstehen, dass die Antriebsklinke zwar bereits in Anlage gegen die Verzahnung
vorliegt, eine Kraftübertragung über die Antriebsklinke auf die Verzahnung jedoch ausbleibt, also die Antriebsklinke gegen die Verzahnung frei mitläuft. Durch diese Maßnahme ist ein zeitlich schnelles Wechseln von der Kraftübertragung über das Koppelelement auf die Kraftübertragung über den Ratschenmechanismus bzw. über die Antriebsklinke begünstigt. Beispielsweise ist dieser zeitlich schnelle Wechsel zu erreichen, indem der Kraftfluss über das Koppelelement unterbrochen wird oder reduziert wird, so dass die bisher gegenüber der Verzahnung freilaufende Antriebsklinke dann kraftübertragend in die Verzahnung eingreift, ohne dass es dazu im Hinblick auf die Antriebsklinke eines Schaltvorganges bedarf.

Das Koppelelement ist jeweils über einen Anlenkpunkt an dem Schneidteil und an dem Handhebel angelenkt, um die Kraftübertragung von dem Handhebel auf das Schneidteil zu bewirken. Beispielsweise ist das Koppelelement länglich ausgebildet. Beispielsweise ist das Koppelelement eine Koppelstange. Beispielsweise sind die Anlenkpunkte zueinander beabstandet angeordnet, insbesondere in Längsrichtung des Koppelelementes zueinander beabstandet angeordnet. Beispielsweise sind die Anlenkpunkte jeweils im Bereich eines längsseitigen Endes des Koppelementes vorgesehen.

Die Schneidvorrichtung umfasst eine Zwangsführung, nämlich eine Linearführung, um eine geführte Bewegung des einen Anlenkpunktes zu ermöglichen und/oder den einen Anlenkpunkt geführt in die Übertragungsposition zu bringen. Als Linearführung ist eine Kulissenführung mit einer Kulisse und einem daran geführten Führungselement vorgesehen, an welchem der eine Anlenkpunkt ausgebildet ist. Die Kulisse weist einen Anschlag für das Führungselement auf, um den einen Anlenkpunkt in der Übertragungsposition zu halten. Schließlich weist die Kulisse einen Führungsabschnitt für eine geführte Bewegung des Führungselementes auf, um die Ausweichbewegung des einen Anlenkpunktes zuzulassen.

Durch eine solche Zwangsführung kann die vorstehend beschriebene Variabilität des einen Anlenkpunktes in technisch einfacher Weise und/oder in baulich kompakter Weise realisiert werden. Die Kulissenführung ermöglicht eine so kompakte Bauweise, dass die Kulissenführung in den Handhebel integriert sein kann, insbesondere darin zumindest teilweise oder vollständig aufgenommen sein kann. Beispielsweise ist die Kulisse an dem Handhebel ausgeformt. Alternativ kann die Kulisse auch ein separates Bauteil sein.

Ferner kann die Kulisse einen weiteren Führungsabschnitt aufweisen, welcher als Zulaufstrecke nutzbar ist, um das Führungselement gegen den Anschlag zu bewegen. Insofern bietet die Kulisse die Möglichkeit, die Bewegung des Führungselementes so zu steuern, dass der eine Anlenkpunkt die Übertragungsposition sicher erreicht, wenn in die Kraftübertragung über das Koppelelement gewechselt werden soll. Beispielsweise ist die Kulisse ringförmig ausgebildet und an dem Innenumfang ist der Anschlag und/oder der Führungsabschnitt und/oder der weitere Führungsabschnitt gebildet, insbesondere zumindest teilweise ausgebildet.

Nach einer Ausführungsform weist der Ratschenmechanismus eine gegen die Verzahnung in Eingriff bringbare Sperrklinke auf, um eine Bewegung des Schneidteiles in Richtung der Offenstellung zu sperren. Diese Maßnahme zielt darauf ab, ein ungewolltes Öffnen des Schneidteiles gegenüber dem Stützteil zu vermeiden, wenn im Zuge eines Ratschenvorganges, also einer Hin- und Herbewegung des Handhebels, eine Rückbewegung des Handhebels ohne Schneidbewegung des Schneidteiles stattfindet. Durch die Sperrklinke ist es ermöglicht, dass das Schneidteil in seiner erreichten Position verbleibt, wenn der Handhebel für einen weiteren Schneidvorgang im Zuge eines erneuten Ratschenvorganges in seine Ausgangsposition zurückbewegt wird.

Es kann ein Rückstellelement vorgesehen sein, welches eingerichtet ist, die Sperrklinke vorzugsweise gegen die Kraft eines Federelementes in eine Entriegelungsposition bezüglich der Verzahnung zu bringen, so dass durch die Kraft eines weiteren Federelementes das Schneidteil eine Öffnungsbewegung in die Offenstellung selbsttätig ausführt. Diese Maßnahme zielt darauf ab, das Öffnen des Schneidteiles, also das Ausführen der Öffnungsbewegung des Schneidteiles in die Offenstellung, handhabungstechnisch zu erleichtern. In der Offenstellung des Schneidteiles kann dann das Schneidgut auf das Stützteil aufgesetzt werden bzw. zwischen dem Schneidteil und dem Stützteil aufgenommen werden.

Bei einer Ausführungsform ist das Rückstellelement eingerichtet, als Führung für das Koppelelement genutzt zu werden. Beispielsweise wird das Rückstellelement als Führung genutzt, um bei der Öffnungsbewegung des Schneidteiles eine damit einhergehende Bewegung des Koppelelementes derart zu führen, dass der eine Anlenkpunkt in die Übertragungsposition gebracht wird. Dadurch kommt dem Rückstellelement eine Mehrfachfunktion zu, was wiederum eine kompakte Ausführung und/oder eine Reduzierung der Schneidvorrichtung auf möglichst wenige Bauteile begünstigt und insbesondere ein betriebssicheres Bewegen des Koppelelementes in die Position zur Kraftübertragung unterstützt. Eine mögliche Ausführung besteht darin, dass das Rückstellelement einen Vorsprung, insbesondere einen Nocken, aufweist und eingerichtet ist, dass der Vorsprung die Sperrklinke in der Entriegelungsposition hält, und beispielsweise ferner vorgesehen ist, dass ein Flächenabschnitt des Vorsprunges die Führung für das Koppelelement bildet.

Beispielsweise ist das Rückstellelement als Rückstellhebel ausgebildet, welcher an dem Stützteil und/oder an einem an dem Stützteil befestigten Griffschenkel schwenkbar gelagert ist. Beispielsweise ist das Rückstellelement gegen die Kraft eines Federelementes von einer Ausgangsposition, wie beispielsweise einer Ruheposition, in eine Funktionsposition verschwenkbar, in welcher das Rückstellelement die Sperrklinke in der Entriegelungsposition hält und/oder als Führung für das Koppelelement dient.

Um von der Kraftübertragung über das Koppelelement auf die Kraftübertragung über die Antriebsklinke zu wechseln, ist nach einer Ausführungsform die Schneidvorrichtung eingerichtet, den einen Anlenkpunkt aus der Übertragungsposition heraus zu bringen, indem der Handhebel von einer Zwischenposition zwischen einer Ausgangsposition und einer Ausstellposition in Richtung der Ausstellposition oder in die Ausstellposition bewegt wird und dabei beispielsweise die Antriebsklinke und die Sperrklinke in Wirkstellung gegen die Verzahnung vorliegen. Durch diese Maßnahme ist es ermöglicht, von einem durch den Koppelmechanismus bewirkten Direkt-Antrieb in einen durch den Ratschenmechanismus bewirkten Ratschen-Antrieb zu wechseln, wozu eine Betätigungsbewegung des Handhebels genutzt wird.

Es wird auf diese Art und Weise eine einfache Bedienung der Schneidvorrichtung unterstützt, um das Schneidteil zeitlich schnell gegen das Schneidgut in eine Schnittposition zu bringen und/oder eine relativ große Schneidkraft zum Schneiden des Schneidgutes aufzubringen. Eine schnelle Zustellung des Schneidteiles von der Offenstellung in die Schneidstellung gegen das Schneidgut ist beispielsweise durch den Direkt-Antrieb zu erreichen. Sofern beispielsweise die benötigte Schneidkraft größer ist als durch den Direkt-Antrieb aufgebracht werden kann, kann durch die besagte Betätigungsbewegung des Handhebels von dem Direkt-Antrieb zu dem Ratschen-Antrieb gewechselt werden, welcher dann ein Schneiden mit größerer Schneidkraft ermöglicht.

Bei einer möglichen Ausführung ist die Schwenkachse des Handhebels im Bereich eines Endes, insbesondere eines längsseitigen Endes, angeordnet, welches dem Schneidteil zugewandt ist. Dadurch ist eine kompakte Bauweise des Koppelmechanismus und/oder des Ratschenmechanismus begünstigt, da die Schwenkachse relativ nahe bei dem Schneidteil vorliegt. Beispielsweise ist die Antriebsklinke des Ratschenmechanismus dem Handhebel zugeordnet, insbesondere daran schwenkbar gelagert. Beispielsweise ist die Verzahnung dem Schneidteil zugeordnet, insbesondere mit dem Schneidteil drehfest verbunden, beispielsweise an dem Schneidteil angeformt.

Bei einer möglichen Ausführung umfasst die Schneidvorrichtung zwei relativ gegeneinander verschwenkbare Griffschenkel, wobei einer der Griffschenkel durch den Handhebel gebildet ist und der andere Griffschenkel als Festschenkel mit dem Stützteil fest verbunden ist oder daran angeformt ist, so dass die Griffschenkel eine Schwenkbewegung um die Schwenkachse des Handhebels ausführen. Der Festschenkel und/oder das Stützteil können auch mit einem Grundkörper fest verbunden sein oder daran angeformt sein. Beispielsweise ist die Sperrklinke des Ratschenmechanismus dem Festschenkel und/oder dem Grundkörper zugeordnet, insbesondere daran schwenkbar gelagert. Beispielsweise ist der Rückstellhebel dem Festschenkel und/oder dem Grundkörper zugeordnet, insbesondere daran schwenkbar gelagert.

Nach einer weiteren Ausführungsform ist die Schneidvorrichtung zum spanlosen Schneiden des Schneidgutes durch Messerwirkung ausgebildet und die Schneide ist eine Messerklinge. Beispielsweise hat die Schneide eine Schneidspitze, welche durch zwei unter einem spitzen Winkel aufeinander zulaufende schräge Ebenen gebildet ist. Die Schneidspitze kann durch zwei unter einem Winkel von weniger als 5 Grad aufeinander zulaufende schräge Ebenen gebildet sein. Es kann ferner vorgesehen sein, dass die Schneide eine geradlinig verlaufende oder im Wesentlichen geradlinig verlaufende Schneidkante bzw. Schneidspitze aufweist.

Beispielsweise weist die Schneide eine Schneidkante auf, welche zumindest über einen Längenabschnitt geradlinig verläuft. Beispielsweise hat die Schneidkante zwei Längenabschnitte, insbesondere aneinander angrenzende Längenabschnitte, welche winklig zueinander vorliegen. Es hat sich gezeigt, dass nach einem Eintritt einer der Längenabschnitte in das Schneidgut der folgende Schneidvorgang erleichtert ist, wenn die wenigstens zwei winklig zueinander vorliegenden Längenabschnitte der Schneidkante vorgesehen sind. Grundsätzlich kann die Schneidkante auch wenigstens einen Längenabschnitt aufweisen, über welchen die Schneidkante gewölbt verläuft.

Ein Verfahren zum spanlosen Schneiden von Schneidgut mittels der vorstehend beschriebenen Schneidvorrichtung umfasst beispielsweise den Schritt, dass das Rückstellelement händisch betätigt wird. Insbesondere umfasst das Verfahren den Schritt, dass das Rückstellelement händisch betätigt wird, wodurch die Sperrklinke in die Entriegelungsposition gebracht wird.

Insbesondere umfasst das Verfahren den Schritt, dass das Rückstellelement händisch betätigt wird, wodurch die Sperrklinke in die Entriegelungsposition gebracht wird und wiederum dadurch mittels Federkraft das Schneidteil eine Öffnungsbewegung in die Offenstellung und das Koppelelement eine mit der Öffnungsbewegung einhergehende Bewegung selbsttätig ausführen.

Insbesondere gelangt durch die Bewegung des Koppelelementes der eine Anlenkpunkt in die Übertragungsposition und damit liegt die Schneidvorrichtung in einem Direkt-Schneidmodus vor. Insbesondere findet in dem Direkt-Schneidmodus über das Koppelelement die Kraftübertragung von dem Handhebel auf das Schneidteil statt. Auf diese Art und Weise kann die Schneidvorrichtung in einen Ausgangszustand gebracht werden, in dem sich die Schneidvorrichtung im Direkt-Schneidmodus und das Schneidteil in der Offenstellung befinden, wobei dieser Ausgangszustand lediglich durch eine Betätigung des Rückstellhebels bewirkt wird.

Ein weiteres Verfahren zum spanlosen Schneiden von Schneidgut mittels der vorstehend beschriebenen Schneidvorrichtung geht beispielsweise aus von dem vorstehend beschriebenen Direkt-Schneidmodus, in dem beispielsweise über das Koppelelement eine Kraftübertragung von dem Handhebel auf das Schneidteil stattfindet und beispielsweise die Antriebsklinke und die Sperrklinke des Ratschenmechanismus in Wirkstellung gegen die Verzahnung vorliegen. Insbesondere geht das weitere Verfahren ferner davon aus, dass das Schneidteil bereits in Richtung der Schließstellung bewegt ist, wodurch sich der Handhebel in einer Zwischenposition zwischen der Ausgangsposition und der Ausstellposition befindet.

Das weitere Verfahren umfasst beispielsweise den Schritt, dass der Handhebel von der Zwischenposition in Richtung der Ausstellposition oder in die Ausstellposition verschwenkt wird. Insbesondere umfasst das weitere Verfahren den Schritt, dass der Handhebel von der Zwischenposition in Richtung der Ausstellposition oder in die Ausstellposition verschwenkt wird, wodurch der eine Anlenkpunkt aus der Übertragungsposition herausgebracht wird und damit die Schneidvorrichtung in einem Ratschen-Schneidmodus vorliegt. Insbesondere findet in dem Ratschen-Schneidmodus über die Antriebsklinke und die Verzahnung die Kraftübertragung von dem Handhebel auf das Schneidteil statt. Dadurch ist eine bedienungsfreundliche Vorgehensweise vorgeschlagen, um von dem Direkt-Schneidmodus in den Ratschen-Schneidmodus zu wechseln, wenn beispielsweise zum Schneiden des Schneidgutes eine größere Schneidkraft erforderlich ist als im Direkt-Schneidmodus aufgebracht werden kann.

Nach einem Aspekt umfasst die Erfindung ferner eine Verwendung der vorstehend beschriebenen Schneidvorrichtung zum Ablängen eines Kunststoff- oder Kunststoffverbundrohres oder eines sonstigen verformbaren Werkstückes. Das Kunststoffrohr und/oder das Kunststoffverbundrohr sind beispielsweise für einen Einsatz im Heizungs- und/oder Sanitärbereich vorgesehen, beispielsweise zur Nutzung in einer Trinkwasserleitung. Das Kunststoffrohr kann aus PE, PP und/oder PVC bestehen oder ein solches Material aufweisen. Bei dem Kunststoffverbundrohr kann es sich um ein sogenanntes Multilayer-Rohr handeln. Beispielsweise ist bei dem Kunststoffverbundrohr eine Aluminiumschicht vorgesehen, insbesondere in die Rohrwandung eingebettet.

Weitere Einzelheiten und Merkmale der Erfindung ergeben sich aus der nachfolgenden Beschreibung eines Ausführungsbeispiels anhand der Zeichnung. Es zeigen:
- Fig. 1: eine mögliche Ausführungsform einer handbetätigbaren Schneidvorrichtung zum spanlosen Schneiden von Schneidgut in einem Ausgangszustand, dargestellt in einer Schnittdarstellung,
- Fig. 2 bis Fig.5: die Schneidvorrichtung" der Figur 1, dargestellt in unterschiedlichen Situationen, um von dem Ausgangzustand in einen Direkt-Schneidmodus zu gelangen,
- Fig. 6 und Fig. 7: die Schneidvorrichtung der Figur 1, dargestellt in unterschiedlichen Situationen während eines Direkt-Schneidvorgangs, und
- Fig. 8 und Fig. 9: die Schneidvorrichtung der Figur 1, dargestellt in unterschiedlichen Situationen, um von dem Direkt-Schneidmodus in einen Ratschen-Schneidmodus zu wechseln.

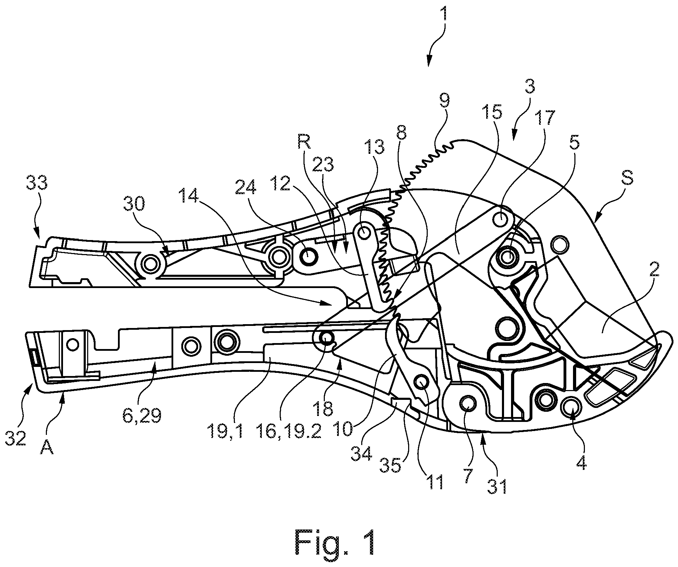

Figur 1 zeigt eine mögliche Ausführungsform einer handbetätigten bzw. handbetätigbaren Schneidvorrichtung 1 zum Schneiden von Schneidgut in einer Schnittdarstellung. Die Schneidvorrichtung 1 kann zum Zertrennen, insbesondere Ablängen von Kunststoffrohren oder Kunststoffverbundrohren genutzt werden. Derartige Rohre werden beispielsweise im Heizungs- und/oder Sanitärbereich eingesetzt, beispielsweise als Bestandteil einer Trinkwasserleitung oder Heizungsleitung. Grundsätzlich kann die Schneidvorrichtung 1 auch zum Schneiden von Ästen oder sonstigem biogenen Schneidgut genutzt werden.

Die Schneidvorrichtung 1 umfasst ein Schneidteil 3 mit einer Schneide 2 und ein als Auflager für das Schneidgut dienendes Stützteil 4, welches beispielsweise die Funktion eines Gegenhalters einnimmt. Bevorzugt ist das Stützteil 4 als Amboss ausgebildet oder weist einen Amboss auf. Alternativ kann das Stützteil 4 selbst auch als Schneide ausgebildet sein oder eine Schneide aufweisen. Bevorzugt ist die Schneide 2 eine Messerklinge, um das Schneidgut durch Messerwirkung zu schneiden.

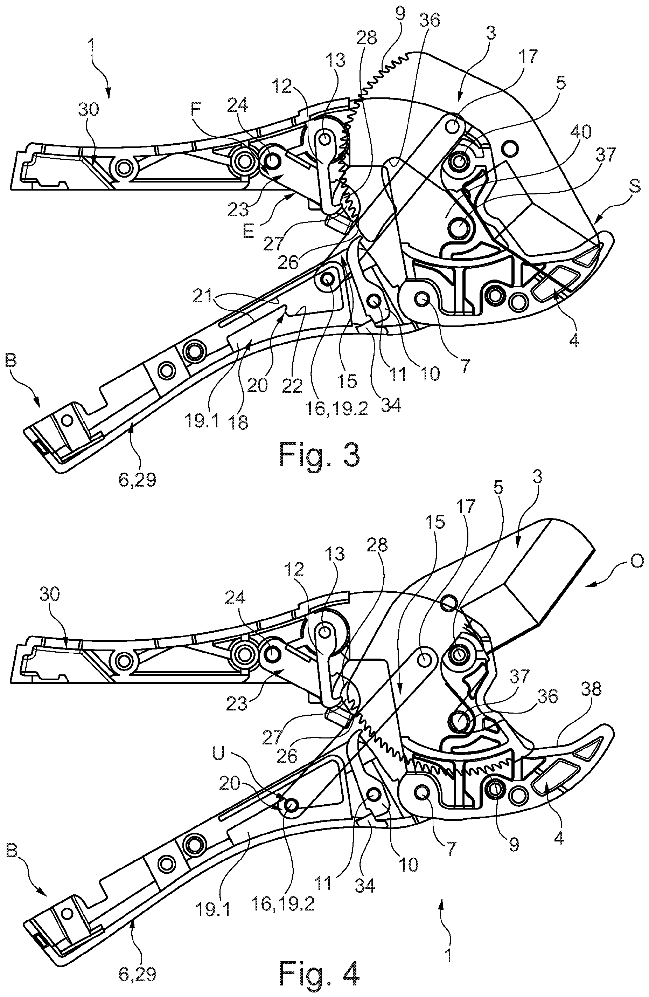

Das Schneidteil 3 und das Stützteil 4 sind um eine gemeinsame Drehachse 5 gegeneinander drehbar gelagert. Dementsprechend ist das Schneidteil 3 relativ gegenüber dem Stützteil 4 zwischen einer Offenstellung O (Figur 4) und einer Schließstellung S um die Drehachse 5 drehbar. In der Figur 1 befindet sich das Schneidteil 3 in der Schließstellung S. Ferner betrifft die Schnittdarstellung der Figur 1 einen Längsschnitt der Schneidvorrichtung 1 quer zur Drehachse 5.

Weiterhin umfasst die Schneidvorrichtung 1 einen Handhebel 6 und einen Ratschenmechanismus 8. Bevorzugt ist der Handhebel 6 um eine Schwenkachse 7 schwenkbar an dem Stützteil 4 angelenkt. Bevorzugt ist die Schwenkachse 7 einem Bereich eines Endes 31, insbesondere längsseitigen Endes des Handhebels 6 zugeordnet. Bevorzugt ist dieses Ende 31 dem Schneidteil 3 zugewandt.

Der Ratschenmechanismus 8 ist dazu eingerichtet, eine Hin- und Herbewegung des Handhebels 6 um die Schwenkachse 7 in eine kontinuierliche Drehbewegung des Schneidteiles 3 in Richtung der Schließstellung S umzuwandeln. Dazu weist der Ratschenmechanismus 8 eine Verzahnung 9 und eine damit in Wirkstellung bringbare oder gebrachte Antriebsklinke 10 auf, um darüber eine Kraftübertragung von dem Handhebel 6 auf das Schneidteil 3 zu bewirken. Bevorzugt weist der Ratschenmechanismus 8 ferner eine Sperrklinke 12 auf, welche mit der Verzahnung 9 in Wirkstellung bringbar oder gebracht ist, um das Schneidteil 3 gegen eine Öffnungsbewegung in Richtung der Offenstellung O zu sperren.

Bevorzugt ist die Verzahnung 9 dem Schneidteil 3 zugeordnet. Bevorzugt ist die Antriebsklinke 10 dem Handhebel 6 zugeordnet. Bevorzugt ist die Sperrklinke 12 dem Stützteil 4 zugeordnet. Beispielsweise ist die Verzahnung 9 mit dem Schneidteil 3 drehfest verbunden und/oder an dem Schneidteil 3 angeformt. Beispielsweise ist die Antriebsklinke 10 an dem Handhebel 6 um eine Drehachse 11 drehbar gelagert. Beispielsweise ist die Sperrklinke 12 an dem Stützteil 4 um eine Drehachse 13 drehbar gelagert.

Bevorzugt ist ein Rückstellelement 23 vorgesehen, welches eingerichtet ist, die Sperrklinke 12 außer Wirkstellung von der Verzahnung 9 zu bringen, so dass die Sperrklinke 12 dann keine Sperrwirkung mehr hinsichtlich des Schneidteiles 3 entfaltet. Beispielsweise ist das Rückstellelement 23 als Rückstellhebel ausgebildet. Bevorzugt ist das Rückstellelement 23 an dem Stützteil 4 um eine Drehachse 24 drehbar gelagert. In der Figur 1 befindet sich das Rückstellelement 23 in einer Ruheposition R. Bevorzugt übt das Rückstellelement 23 in der Ruheposition R keine Funktion aus.

Bevorzugt bildet der Handhebel 6 einen von zwei Griffschenkeln 29, 30, welche gegeneinander verschwenkbar sind, so dass beispielsweise die Schneidvorrichtung 1 bezüglich ihrer Griffschenkel 29, 30 in Art einer Schere oder Zange ausgebildet ist. Beispielsweise ist der andere Griffschenkel 30 als Festschenkel mit dem Stützteil 4 fest verbunden oder daran angeformt, so dass die Griffschenkel 29, 30 eine Schwenkbewegung relativ zueinander um die Schwenkachse 7 ausführen. In diesem Fall kann die Sperrklinke 12 auch dem als Festschenkel ausgebildeten Griffschenkel 30 zugeordnet sein, insbesondere daran um die Drehachse 13 drehbar gelagert sein. Bevorzugt weisen die Griffschenkel 29, 30 jeweils ein Ende 32, 33 auf, welches jeweils von dem Schneidteil 3 weggewandt vorliegt und beispielsweise ein freies Ende bildet.

Die Schneidvorrichtung 1 umfasst ferner einen Koppelmechanismus 14, welcher eingerichtet ist, eine einmalige Schwenkbewegung des Handhebels 6 um die Schwenkachse 7 in eine Drehbewegung des Schneidteiles 3 von der Offenstellung O in die Schließstellung S umzuwandeln. Durch den Koppelmechanismus 14 findet also, anders als bei dem Ratschenmechanismus 8 keine Aufteilung der Schneidbewegung des Schneidteiles 3 in mehrere Betätigungsbewegungen des Handhebels 6 statt, sondern durch eine einzige Betätigungsbewegung des Handhebels 6 wird eine einzige Schneidbewegung des Schneidteiles 3 ausgeführt.

Dazu hat der Koppelmechanismus 14 ein Koppelelement 15, wie beispielsweise eine Koppelstange, um darüber eine Kraftübertragung von dem Handhebel 6 auf das Schneidteil 3 zu bewirken. Bevorzugt liegt bei der Kraftübertragung über das Koppelelement 15 die Antriebsklinke 10 außerhalb des Kraftflusses, es findet also keine Kraftübertragung über die Antriebsklinke 10 statt. Bevorzugt ist über das Koppelelement 15 eine direkte triebmäßige Verbindung zwischen dem Handhebel 6 und dem Schneidteil 3 bewirkt.

Das Koppelelement 15 ist über zwei zueinander beabstandete Anlenkpunkte 16, 17 einerseits an dem Schneidteil 3 und andererseits an den Handhebel 6 angelenkt, um die Kraftübertragung von dem Handhebel 6 auf das Schneidteil 3 zu bewirken. Bevorzugt ist der dem Schneidteil 3 zugeordnete Anlenkpunkt 17 in einem Abstand zu der Drehachse 5 angeordnet, um welche sich das Schneidteil 3 relativ gegenüber dem Stützteil 4 verdrehen lässt. Beispielsweise liegt der eine Anlenkpunkt 17 oberhalb der Drehachse 5, wenn sich das Schneidteil 3 in der Schließstellung S befindet. Beispielsweise ist der eine Anlenkpunkt 17 durch einen Verbindungsstift gebildet, durch welchen das Koppelelement 15 mit dem Schneidteil 3 drehbar verbunden ist.

Bevorzugt ist der dem Handhebel 6 zugeordnete Anlenkpunkt 16 lageveränderlich, indem der Anlenkpunkt 16 eingerichtet ist, eine Ausweichbewegung auf eine von dem Handhebel 6 und/oder dem Schneidteil 3 ausgeübte Bewegung auszuführen. Bevorzugt befindet sich der Anlenkpunkt 16 in einer Übertragungsposition U (Figur 4), wenn die Kraftübertragung von dem Handhebel 6 auf das Schneidteil 3 stattfindet bzw. stattfinden soll, damit das Schneidteil 3 eine Schneidbewegung in Richtung der Schließstellung S ausführt.

Um die Ausweichbewegung des einen Anlenkpunktes 16 zu ermöglichen, ist bei der Schneidvorrichtung 1 eine Kulissenführung 18 vorgesehen. Die Kulissenführung 18 umfasst eine Kulisse 19.1 und ein daran geführtes Führungselement 19.2, welches den einen Anlenkpunkt 16 bildet bzw. aufweist. Bevorzugt ist die Kulissenführung 18 dem Handhebel 6 zugeordnet, insbesondere in den Handhebel 6 integriert. Die Kulisse 19.1 kann ein separates Bauteil sein oder an dem Handhebel 6 ausgeformt sein.

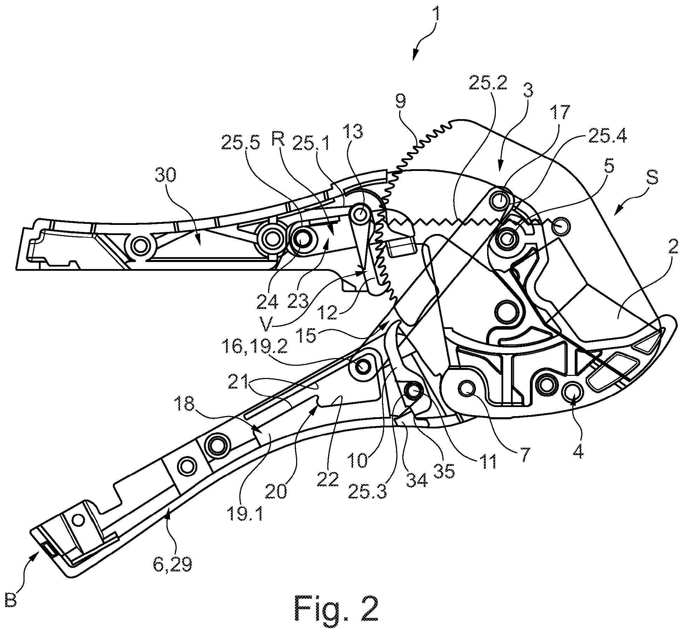

Wie insbesondere aus Figur 2 ersichtlich ist, umfasst die Kulisse 19.1 einen Anschlag 20 für das Führungselement 19.2, um den einen Anlenkpunkt 16 in der Übertragungsposition U (Figur 4) zu halten. Ferner weist die Kulisse 19.1 wenigstens einen Führungsabschnitt 21 für eine geführte Bewegung des Führungselementes 19.2 aufweisen, um die Ausweichbewegung des einen Anlenkpunktes 16 zuzulassen. Auch kann ein weiterer Führungsabschnitt 22 vorgesehen sein, welcher als Zulaufstrecke nutzbar ist, um das Führungselement 19.2 in Position gegen den Anschlag 20 zu bringen.

Bevorzugt ist die Kulisse 19.1 ringförmig ausgebildet und der Anschlag 20 und/oder der Führungsabschnitt 21 und/oder der weitere Führungsabschnitt 22 sind an Umfangabschnitten des Innenumfangs der Kulisse 19.1 ausgebildet. Bevorzugt ist die ringförmige Kulisse 19.1 an einer Umfangsstelle offen ausgebildet, so dass darüber das Führungselement 19.2 in den Innenraum der ringförmigen Kulisse 19.1 eingebracht werden kann.

Aus der Figur 2 ist ferner ersichtlich, dass die Schneidvorrichtung 1 mehrere Federelemente 25.1, 25.2, 25.3, 25.4, 25.5 umfassen kann, um bestimmte Bauteile der Schneidvorrichtung 1 durch Federkraft selbsttätig zu bewegen. Bevorzugt ist eines der Federelemente 25.1, 25.2, 25.3, 25.4, 25.5, insbesondere das eine Federelement 25.1, welches nachfolgend auch als erstes Federelement bezeichnet ist, der Sperrklinke 12 zugeordnet.

Bevorzugt ist ein weiteres der Federelemente 25.1, 25.2, 25.3, 25.4, 25.5, insbesondere das eine weitere Federelement 25.2, welches nachfolgend auch als zweites Federelement bezeichnet ist, dem Schneidteil 3 zugeordnet. Bevorzugt ist ein drittes Federelement 25.3 der Antriebsklinke 10 zugeordnet. Bevorzugt ist ein viertes Federelement 25.4 dem Koppelelement 15, insbesondere dem einen Anlenkpunkt 17, zugeordnet. Bevorzugt ist ein fünftes Federelement 25.5 dem Rückstellelement 23 zugeordnet.

Die Schneidvorrichtung 1 ermöglicht ein spanloses Schneiden von Schneidgut durch Handkraft, wobei zwei unterschiedliche Betriebsmodi, nämlich zum einen ein Direkt-Schneidmodus und zum anderen ein Ratschen-Schneidmodus, genutzt werden können. Die Funktionsweise der Schneidvorrichtung 1 wird nachfolgend beispielhaft beschrieben:
Bevorzugt befindet sich die Schneidvorrichtung 1 vor einem Schneidbetrieb in einem Ausgangszustand, in welchem die Schneidvorrichtung 1 beispielsweise zum Zwecke der Aufbewahrung und/oder des Transportes vorliegen kann. In dem Ausgangszustand, welcher beispielsweise in der Figur 1 dargestellt ist, befindet sich das Schneidteil 3 in der Schließstellung S und der Handhebel 6 befindet sich in einer Ausgangsposition A. Bevorzugt ist in der Ausgangsposition A der Handhebel 6 nahe an den Griffschenkel 30 verschwenkt. Bevorzugt ist in der Ausgangsposition A der Handhebel 6 durch eine (in der Figur 1 nicht dargestellte) Arretierung in seiner Position fixiert. Bevorzugt wirkt in der Ausgangsposition A die Kraft eines (in den Figuren nicht dargestellten) Federelementes als Rückstellkraft bzw. Ausstellkraft auf den Handhebel 6. Beispielsweise ist dieses Federelement als Schenkelfeder ausgebildet, welches sich einerseits gegen den Handhebel 6 und andererseits gegen das Stützteil 4 abstützt und beispielsweise die Schwenkachse 7 umgibt.

Bevorzugt befindet sich in dem Ausgangszustand das Rückstellelement 23 in der Ruheposition R, in welcher es keine Funktion auf die Sperrklinke 12 ausübt. Die Sperrklinke 12 befindet sich dadurch in Wirkstellung gegen die Verzahnung 9, insbesondere in Eingriff gegen die Verzahnung 9. Insbesondere wird die Sperrklinke 12 durch die Kraft des ersten Federelementes 25.1 gegen die Verzahnung 9 gedrückt. In dem Ausgangszustand kann auch die Antriebsklinke 10 in Wirkstellung gegen die Verzahnung 9 vorliegen, beispielsweise in die Verzahnung 9 eingreifen. Beispielsweise wird die Antriebsklinke 10 durch die Kraft des dritten Federelementes 25.3 gegen die Verzahnung 9 gedrückt. In dem Ausgangszustand befindet sich beispielsweise das Führungselement 19.2 außerhalb des Anschlages 20.

Durch vorzugsweise händisches Entriegeln der Arretierung des Handhebels 6 wird der Handhebel 6 durch die Kraft des zugehörigen (in den Figuren nicht dargestellten) Federelementes von der Ausgangsposition A in die Ausstellposition B selbsttätig ausgelenkt, wobei das Schneidteil 3 aufgrund der Sperrwirkung der Sperrklinke 12 in der Schließstellung S verbleibt. Bevorzugt wird durch die Kraft des vierten Federelementes 25.4 das Koppelelement 15 in seiner bisherigen Lage gehalten bzw. weitgehend gehalten, so dass das Führungselement 19.2 außer Anlage gegen den Anschlag 20 verbleibt, insbesondere im Bereich eines oberen, dem Stützteil 4 zugewandten Endes des Kulisse 19.1 vorliegt. Der Zustand der Schneidvorrichtung 1 nach dem Entriegeln der Arretierung ist der Figur 2 dargestellt. Bevorzugt befindet sich in der Ausstellposition B der Handhebel 6 in Bezug auf den einen Griffschenkel 30 in einer ausgestellten Lage, insbesondere in einer maximalen ausgestellten Lage.

Durch das Auslenken des Handhebels 6 von der Ausgangsposition A in die Ausstellposition B ist die Antriebsklinke 10 außer Eingriff gegen die Verzahnung 9 gebracht. Bevorzugt befindet sich die Antriebsklinke 10 in Anlage gegen einen Anschlag 35 eines Anschlagteiles 34, welches beispielsweise mit dem Handhebel 6 fest verbunden ist oder daran angeformt ist. Bevorzugt ist der Anschlag 35 so bemessen, dass die Bewegung der Antriebsklinke 10 so begrenzt ist, dass in der Ausstellposition B des Handhebels 6 durch den Anschlag 35 die Antriebsklinke 10 in Abstand zu der Verzahnung 9 gehalten ist. Bevorzugt wird die Antriebsklinke 10 durch die Kraft des dritten Federelemente 25.3 gegen dem Anschlag 35 oder die Verzahnung 9 gedrückt.

Um nunmehr das Schneidteil 3 aus der Schließstellung S herauszubringen, wird das Rückstellelement 23 von seiner Ruheposition R in eine Funktionsposition F gebracht, insbesondere um die Drehachse 24 verschwenkt. Dieser Zustand ist in Figur 3 dargestellt. Das Rückstellelement 23 befindet sich dort in der Funktionsposition F, in welcher das Rückstellelement 23 die Sperrklinke 12 aus seiner Verriegelungsposition V (Figur 2) gegen die Verzahnung 9 herausgebracht hat und sich nunmehr in einer Entriegelungsposition E befindet.

Bevorzugt ist dies durch einen Vorsprung 27 an dem Rückstellelement 23 bewirkt, welcher einen Flächenabschnitt 28 beispielsweise einer Umfangsfläche aufweist, die einen Mitnehmer bildet, um die Sperrklinke 12 mitzunehmen und von der Verriegelungsposition V in die Entriegelungsposition E zu bewegen und insbesondere zu halten. Bevorzugt kommt dem Vorsprung 27 eine weitere Funktion zu, beispielsweise dient der Vorsprung 27 als Führung 26 für das Koppelelement 15 im Zuge seiner Bewegung von der Position gemäß der Figur 3 in eine Position gegen den Anschlag 20, welche aus Figur 4 ersichtlich ist.

Wie beispielsweise aus der Figur 3 ersichtlich ist, kann zwischen dem einen Griffschenkel 30 und dem Stützteil 4 ein Grundkörper 40 vorgesehen sein. Der Grundkörper 40 kann mit dem einen Griffschenkel 30 fest verbunden und/oder dem Stützteil 4 fest verbunden sein. Insbesondere ist der eine Griffschenkel 30 an dem Grundkörper 40 angeformt und/oder das Stützteil 4 ist an dem Grundkörper 40 angeformt.

Durch das Entriegeln der Sperrklinke 12 und durch das außer Eingriff bringen der Antriebsklinke 10 gegenüber der Verzahnung 9 aufgrund der Schwenkbewegung des Handhebels 6 in die Ausstellposition B ist das Schneidteil 3 frei beweglich und wird durch die Kraft des zweiten Federelementes 25.2 von der Schließstellung S selbsttätig in die Offenstellung O bewegt. Bevorzugt ist die Offenstellung O die größtmögliche ausgestellte Position des Schneidteiles 3 weg von einem Stützabschnitt 38 des Stützteiles 4, welcher der Schneide 2 des Schneidteiles 3 gegenüberliegt. Bevorzugt ist in der Offenstellung O das Schneidteil 3 über einen Anschlag 36 gegen einen an dem Stützteil 3 angeordneten Gegenanschlag 37 in Anlage gebracht.

Der nunmehr erreichte Zustand der Schneidvorrichtung 1 ist in der Figur 4 dargestellt. Im Zuge der Öffnungsbewegung des Schneidteiles 3 in die Offenstellung O hat auch das Koppelelement 15 eine Bewegung ausgeführt, welche durch die Führung 26 des Rückstellelementes 23 in der Art und Weise zwangsgeführt wurde, dass das Führungselement 19.2 in Anlage gegen den Anschlag 20 gelangt und damit der eine Anlenkpunkt 16 sich in einer Übertragungsposition U befindet. In der Übertragungsposition U ist nunmehr über das Koppelelement 15 eine Kraftübertragung von dem Handhebel 6 auf das Schneidteil 3 möglich.

Durch das Überführen des einen Anlenkpunktes 16 in die Übertragungsposition U befindet sich die Schneidvorrichtung 1 in dem Direkt-Schneidmodus. Um nunmehr in diesem Modus ein Schneiden des Schneidgutes durchzuführen, ist bevorzugt das Rückstellelement in die Ruheposition zurückzubewegen. Bevorzugt ist das zu erreichen, indem das bisher beispielsweise händisch festgehaltene Rückstellelement 23 losgelassen wird und durch die Kraft des fünften Federelementes 25.5 selbsttätig in die Ruheposition R bewegt wird. Bevorzugt wird die Sperrklinke 12 dann durch die Kraft des ersten Federelementes 25.1 wieder in die Verrieglungsposition V bewegt.

Im Zuge des vorliegenden Direkt-Schneidmodus wird durch ein händisches Betätigen des Handhebels 6 von der Ausstellposition B in Richtung zu der Ausgangsposition A nunmehr über das Koppelelement 15 eine Kraftübertragung von dem Handhebel 6 direkt auf das Schneidteil 3 bewirkt, wodurch das Schneidteil 3 von der Offenstellung O in Richtung der Schließstellung S bewegt wird.

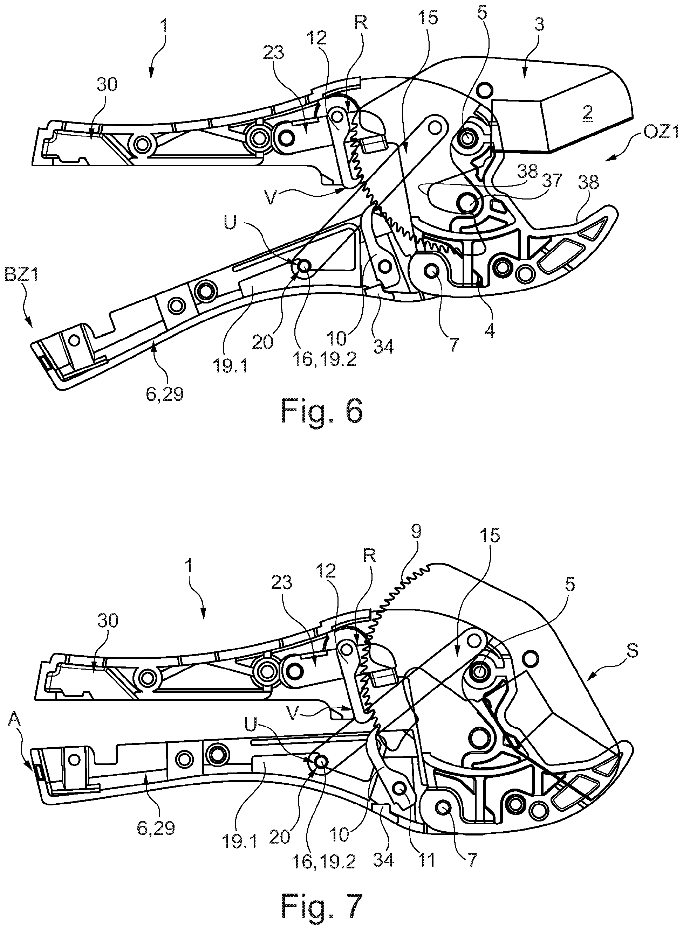

Figur 6 zeigt beispielhaft einen Zustand, in dem der Handhebel 6 von der Ausstellposition B in Richtung zu der Ausgangsposition A bewegt wurde und dadurch sich in einer ersten Zwischenposition BZ1 befindet. In entsprechender Weise ist das Schneidteil 3 von der Offenstellung O in Richtung zu der Schließstellung S bewegt worden und befindet sich nunmehr in einer ersten Zwischenstellung OZ1. Figur 7 zeigt den Zustand, in dem der Direkt-Schneidvorgang beendet ist und sich der Handhebel 6 wiederum in der Ausgangsposition A befindet und dementsprechend das Schneidteil 3 in die Schließstellung S gebracht ist.

Wie aus den Figuren 6 und 7 ersichtlich ist, können sich die Sperrklinke 12 und die Antriebsklinke 10 jeweils in Wirkstellung gegen die Verzahnung 9 befinden. Durch die Kraftübertragung über das Koppelelement 15 befindet sich die Antriebsklinke 10 gegenüber der Verzahnung 9 in einem Freilauf. Ebenso befindet sich die Sperrklinke 12 gegenüber der Verzahnung 9 in einem Freilauf.

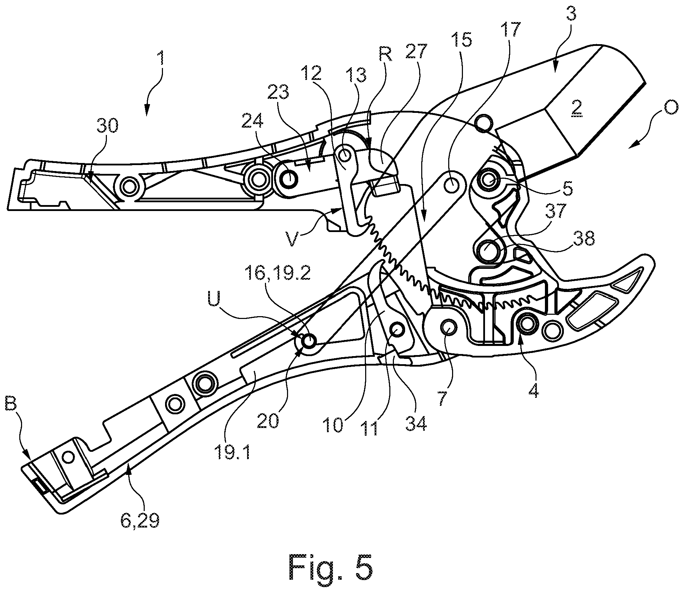

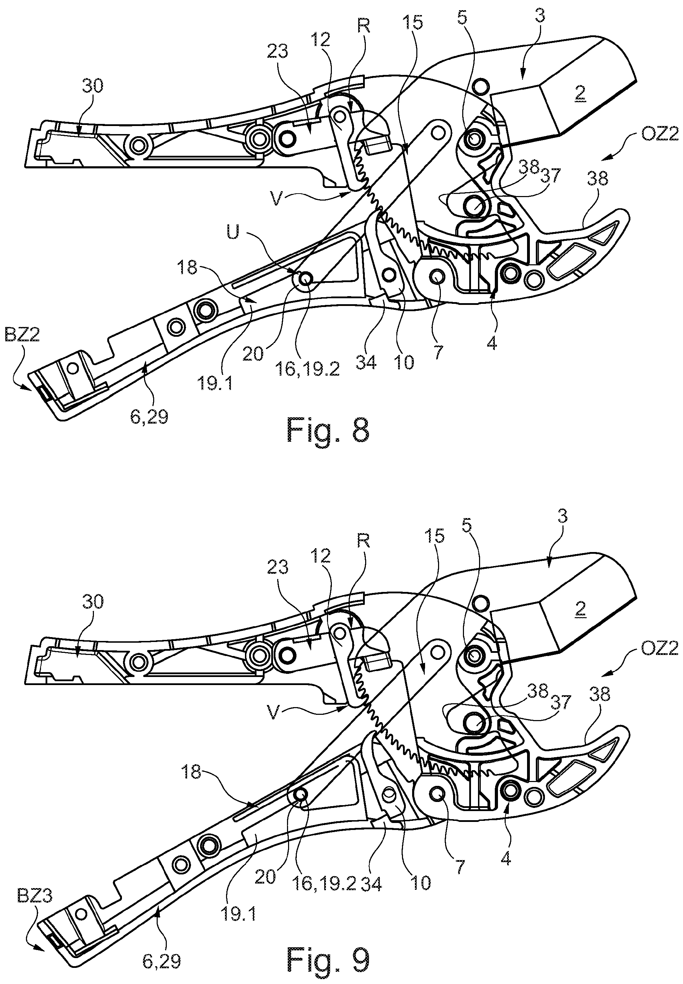

Figuren 8 und 9 veranschaulichen die Funktionsweise der Schneidvorrichtung 1 bei einem Wechsel von dem Direkt-Schneidmodus in den Ratschen-Schneidmodus. Um einen solchen Wechsel vorzunehmen, wird der Handhebel 6 ausgehend von der Ausstellposition A gemäß der Figur 5 in Richtung zu dem einen Griffschenkel 30 bewegt und in eine zweite Zwischenposition BZ2 gebracht und durch Kraftübertragung über das Koppelelement 15 das Schneidteil 3 von der Offenstellung O in eine zweite Zwischenstellung OZ2 verschwenkt.

Um nunmehr von dem vorliegenden Direkt-Schneidmodus in den Ratschen-Schneidmodus zu wechseln, wird der Handhebel 6 etwas losgelassen, so dass der Handhebel 6 durch die Kraft des zugehörigen (in den Figuren nicht dargestellten) Federelementes selbsttätig zurück in Richtung der Ausstellposition B, beispielsweise in eine dritte Zwischenposition BZ3, zurück verschwenkt wird. Da sich die Sperrklinke 12 in der Verriegelungsposition V gegen die Verzahnung 9 befindet, bleibt eine Öffnungsbewegung des Schneidteiles 3 in Richtung zu der Offenstellung O aus. Das Schneidteil 3 bleibt vielmehr in der Zwischenstellung OZ2, wie sie in der Figur 8 gezeigt ist.

Aufgrund der Schwenkbewegung des Handhebels 6 in Richtung zu der Ausstellposition B und aufgrund des unbewegt verbleibenden Schneidteiles 3 wird der Anschlag 20 der Kulisse 19.1 aus der Anschlagsposition gegen das Führungselement 19.2 gebracht und damit verlässt der eine Einlenkpunkt 16 die Übertragungsposition U. Dadurch findet nunmehr die Kraftübertragung von dem Handhebel 6 auf das Schneidteil 3 nicht mehr über das Koppelelement 15 statt, sondern die Kraftübertragung erfolgt über die Antriebsklinke 10, wenn der Handhebel 6 in Richtung zu der Ausgangsposition A betätigt wird. Aufgrund der Ausgestaltung der Kulisse 19.1 kann das Führungselement 19.2 in der Kulisse 19.1 eine Ausweichbewegung ausführen, so dass sichergestellt ist, das in dem Ratschen-Schneidmodus eine Kraftübertragung über das Koppelelement 15 ausbleibt.

Die beispielhaft beschriebene Funktionsweise ermöglicht es, dass sich die Schneidvorrichtung 1 zuerst in dem Direkt-Schneidmodus befindet, wenn die Schneidvorrichtung 1 geöffnet wird, also die Arretierung des Handhebels 6 aufgehoben wird und der Handhebel 6 dann in die Ausstellposition B selbsttätig verschwenkt (Figur 5). Durch den Direkt-Schneidmodus ist eine Schnellzustellung des Schneidteiles 3 gegen ein zwischen dem Schneidteil 3 und dem Stützabschnitt 38 des Stützteiles 4 aufgelegtes Schneidgut ermöglicht, indem durch eine einmalige Schwenkbewegung bzw. Betätigung des Handhebels 6 um die Schwenkachse 7 das Schneidteil 3 einmalig von der Offenstellung O in Anlageposition gegen das Schneidgut gebracht werden kann.

Je nach erforderlicher Schneidkraft kann dann entweder in dem Direkt-Schneidmodus verblieben werden oder, wie vorstehend beschrieben, in den Ratschen-Schneidmodus gewechselt werden. Insofern ergeben sich bei der Schneidvorrichtung 1 die Vorteile eines Schneidens von Schneidgut über einen breiten Bereich einer aufbringbaren Schneidkraft. Zugleich kann der Schneidvorgang auch für relativ kompaktes Schneidgut zeitlich schnell ausgeführt werden, da über den Direkt-Schneidmodus eine Schnell-Zustellung des Schneidteiles 3 von der Offenstellung O bis zur Anlage gegen das Schneidgut ermöglicht wird.

Beispielsweise ermöglicht die Schneidvorrichtung 1 ein Durchtrennen von Kunststoffrohren oder Kunststoffverbundrohren mit einem Durchmesser bis etwa 30 mm, insbesondere bis 35, vorzugsweise bis 32 mm im Direkt-Schneidmodus. Durch den Ratschen-Schneidmodus können Kunststoffrohre oder Kunststoffverbundrohre mit einem Durchmesser bis zu etwa 75 mm, insbesondere 75 mm, geschnitten bzw. abgelängt werden.

### Bezugszeichenliste

- 1: Schneidvorrichtung
- 2: Schneide
- 3: Schneidteil
- 4: Stützteil
- 5: Drehachse
- 6: Handhebel
- 7: Schwenkachse
- 8: Ratschenmechanismus
- 9: Verzahnung
- 10: Antriebsklinke
- 11: Drehachse
- 12: Sperrklinke
- 13: Drehachse
- 14: Koppelmechanismus
- 15: Koppelelement
- 16: Anlenkpunkt
- 17: Anlenkpunkt
- 18: Kulissenführung
- 19.1: Kulisse
- 19.2: Führungselement
- 20: Anschlag
- 21: Führungsabschnitt
- 22: weiterer Führungsabschnitt
- 23: Rückstellelement
- 24: Drehachse
- 25.1: Federelement (erstes Federelement)
- 25.2: weiteres Federelement (zweites Federelement)
- 25.3: drittes Federelement
- 25.4: viertes Federelement
- 25.5: fünftes Federelement
- 26: Führung
- 27: Vorsprung
- 28: Flächenabschnitt
- 29: Griffschenkel
- 30: Griffschenkel
- 31: Ende
- 32: Ende
- 33: Ende
- 34: Anschlagteil
- 35: Anschlag
- 36: Anschlag
- 37: Gegenanschlag
- 38: Stützabschnitt
- 40: Grundkörper

- S: Schließstellung (Schneidteil 3)
- O: Offenstellung (Schneidteil 3)
- OZ1: Zwischenstellung (Schneidteil 3)
- OZ2: Zwischenstellung (Schneidteil 3)

- A: Ausgangsposition (Handhebel 6)
- B: Ausstellposition (Handhebel 6)
- BZ1: Zwischenposition (Handhebel 6)
- BZ2: Zwischenposition (Handhebel 6)
- BZ3: Zwischenposition (Handhebel 6)

- E: Entriegelungsposition (Sperrklinke 12)
- V: Verriegelungsposition (Sperrklinke 12)

- U: Übertragungsposition (Anlenkpunkt 16)
- R: Ruheposition (Rückstellelement 23)
- F: Funktionsposition (Rückstellelement 23)

## Patentansprüche

1. Schneidvorrichtung (1) zum spanlosen Schneiden von Schneidgut,
umfassend ein, eine Schneide (2) aufweisendes Schneidteil (3) und ein als Auflager für das Schneidgut nutzbares Stützteil (4), wobei das Schneidteil (3) und das Stützteil (4) um eine Drehachse (5) gegeneinander drehbar gelagert sind und eingerichtet sind, zwischen einer Offenstellung (O) und einer Schließstellung (S) relativ zueinander um die Drehachse (5) gedreht zu werden, und
umfassend einen Handhebel (6) und einen Ratschenmechanismus (8), wobei der Handhebel (6) um eine Schwenkachse (7) schwenkbar an dem Stützteil (4) angelenkt ist und der Ratschenmechanismus (8) eingerichtet ist, eine Hin- und Herbewegung des Handhebels (6) um die Schwenkachse (7) in eine kontinuierliche Drehbewegung des Schneidteiles (3) in Richtung der Schließstellung (S) umzuwandeln, wobei der Ratschenmechanismus (8) eine Verzahnung (9) und eine damit in Wirkstellung bringbare Antriebsklinke (10) aufweist, um darüber eine Kraftübertragung von dem Handhebel (6) auf das Schneidteil (3) zu bewirken, und ferner
umfassend einen Koppelmechanismus (14), welcher eingerichtet ist, eine einmalige Schwenkbewegung des Handhebels (6) um die Schwenkachse (7) in eine Drehbewegung des Schneidteiles (3) von der Offenstellung (O) in die Schließstellung (S) umzuwandeln, wobei der Koppelmechanismus (14) ein separates Koppelelement (15) aufweist, um darüber eine Kraftübertragung von dem Handhebel (6) auf das Schneidteil (3) zu bewirken, wobei das Koppelelement (15) jeweils über einen Anlenkpunkt (16; 17) an dem Schneidteil (3) und an dem Handhebel (6) angelenkt ist, um die Kraftübertragung von dem Handhebel (6) auf das Schneidteil (3) zu bewirken und einer der Anlenkpunkte (16, 17) lageveränderlich ist, wobei der eine Anlenkpunkt (16) sich in einer Übertragungsposition (U) befindet, um die Kraftübertragung von dem Handhebel (6) auf das Schneidteil (3) zu bewirken und eingerichtet ist, eine Ausweichbewegung auf eine von dem Handhebel (6) oder dem Schneidteil (3) ausgeübte Bewegung auszuführen,**dadurch gekennzeichnet, dass** die Schneidvorrichtung (1) eine Kulissenführung (18) mit einer Kulisse (19.1) und einem daran geführten Führungselement (19.2) umfasst, wobei an dem Führungselement (19.2) der eine Anlenkpunkt (16) ausgebildet ist und wobei die Kulisse (19.2) einen Anschlag (20) für das Führungselement (19.2) aufweist, um den einen Anlenkpunkt (16) in der Übertragungsposition (U) zu halten, wobei die Kulisse (19.2) ferner einen Führungsabschnitt (21) für eine geführte Bewegung des Führungselementes (19.2) aufweist, um die Ausweichbewegung des einen Anlenkpunktes (16) zuzulassen.

2. Schneidvorrichtung nach Anspruch 1, wobei die Schneidvorrichtung (1) eingerichtet ist, dass bei der Kraftübertragung über das Koppelelement (15) die Antriebsklinke (10) in Wirkstellung gegen die Verzahnung (9) vorliegt und sich in einem Freilaufbetrieb befindet.

3. Schneidvorrichtung nach Anspruch 1 oder 2, wobei die Kulisse (19.1) einen weiteren Führungsabschnitt (22) aufweist, welcher als Zulaufstrecke nutzbar ist, um das Führungselement (19.2) gegen den Anschlag (20) zu bewegen.

4. Schneidvorrichtung nach einem der vorangehenden Ansprüche, wobei die Kulissenführung (18) in den Handhebel (6) integriert ist.

5. Schneidvorrichtung nach einem der vorangehenden Ansprüche, wobei der Ratschenmechanismus (8) eine gegen die Verzahnung (9) in Eingriff bringbare Sperrklinke (12) aufweist,.um eine Bewegung des Schneidteiles (3) in Richtung der Offenstellung (O) zu sperren, und ein Rückstellelement (23) vorgesehen ist, welches eingerichtet ist, die Sperrklinke (12) vorzugsweise gegen die Kraft eines Federelementes (25.1) in eine Entriegelungsposition (E) bezüglich der Verzahnung (9) zu bringen, so dass durch die Kraft eines weiteren Federelementes (25.2) das Schneidteil (2) eine Öffnungsbewegung in die Offenstellung (O) selbsttätig ausführt.

6. Schneidvorrichtung nach Anspruch 5, wobei das Rückstellelement (23) eingerichtet ist, als Führung (26) für das Koppelelement (15) genutzt zu werden, um bei der Öffnungsbewegung des Schneidteiles (3) eine damit einhergehende Bewegung des Koppelelementes (15) derart zu führen, dass der eine Anlenkpunkt (16) in die Übertragungsposition (U) gebracht wird.

7. Schneidvorrichtung nach Anspruch 6, wobei das Rückstellelement (23) einen Vorsprung (27) aufweist und eingerichtet ist, dass der Vorsprung (27) die Sperrklinke (12) in der Entriegelungsposition (E) hält, wobei ein Flächenabschnitt des Vorsprunges (27) die Führung (26) für das Koppelelement (15) bildet.

8. Schneidvorrichtung nach einem der Ansprüche 5 bis 7, wobei die Schneidvorrichtung (1) eingerichtet ist, den einen Anlenkpunkt (16) aus der Übertragungsposition (U) heraus zu bringen, um von der Kraftübertragung über das Koppelelement (15) auf die Kraftübertragung über die Antriebsklinke (10) zu wechseln, indem die Antriebsklinke (10) und die Sperrklinke (12) in Wirkstellung gegen die Verzahnung (9) vorliegen und der Handhebel (6) von einer Zwischenposition (BZ1; BZ2; BZ3) zwischen einer Ausgangsposition (A) und einer Ausstellposition (B) in Richtung der Ausstellposition (A) oder in die Ausstellposition (A) bewegt wird.

9. Schneidvorrichtung nach einem der vorhergehenden Ansprüche, wobei die Schwenkachse (7) im Bereich eines Endes (31) des Handhebels (6) angeordnet ist, wobei das eine Ende (31) des Handhebels (6) dem Schneidteil (3) zugewandt ist.

10. Schneidvorrichtung nach einem der vorhergehenden Ansprüche, wobei die Schneidvorrichtung (1) zum spanlosen Schneiden des Schneidgutes durch Messerwirkung ausgebildet ist und die Schneide (2) eine Messerklinge ist.

11. Verfahren zum spanlosen Schneiden von Schneidgut mittels einer Schneidvorrichtung (1) nach einem der Ansprüche 5 bis 8, bei dem das Rückstellelement (23) der Schneidvorrichtung (1) händisch betätigt wird, wodurch die Sperrklinke (12) der Schneidvorrichtung (1) in die Entriegelungsposition (E) gebracht wird und wiederum dadurch mittels Federkraft das Schneidteil (2) der Schneidvorrichtung (1) eine Öffnungsbewegung in die Offenstellung (O) und das Koppelelement (15) der Schneidvorrichtung (1) eine mit der Öffnungsbewegung einhergehende Bewegung selbsttätig ausführen, wobei durch die Bewegung des Koppelelementes (15) der eine Anlenkpunkt (16) in die Übertragungsposition (U) gelangt und damit die Schneidvorrichtung (1) in einem Direkt-Schneidmodus vorliegt, in dem über das Koppelelement (15) die Kraftübertragung von dem Handhebel (6) auf das Schneidteil (3) stattfindet.

12. Verfahren zum spanlosen Schneiden von Schneidgut mittels einer Schneidvorrichtung (1) nach Anspruch 8, wobei die Schneidvorrichtung (1) sich in einem Direkt-Schneidmodus befindet, in dem über das Koppelelement (15) der Schneidvorrichtung (1) eine Kraftübertragung von dem Handhebel (6) auf das Schneidteil (3) der Schneidvorrichtung (1) stattfindet und die Antriebsklinke (10) und die Sperrklinke (12) des Ratschenmechanismus (8) der Schneidvorrichtung (1) in Wirkstellung gegen die Verzahnung (9) vorliegen, und das Schneidteil (3) bereits in Richtung der Schließstellung (S) bewegt ist, wodurch sich der Handhebel (6) in einer Zwischenposition (BZ1; BZ2; BZ3) zwischen der Ausgangsposition (A) und der Ausstellposition (B) befindet, wobei das Verfahren den Schritt umfasst, dass der Handhebel (6) von der Zwischenposition (BZ1; BZ2; BZ3) in Richtung der Ausstellposition (A) oder in die Ausstellposition (A) verschwenkt wird, wodurch der eine Anlenkpunkt (16) aus der Übertragungsposition (U) herausgebracht wird und damit die Schneidvorrichtung (1) in einem Ratschen-Schneidmodus vorliegt, in dem über die Antriebsklinke (10) und die Verzahnung (9) die Kraftübertragung von dem Handhebel (6) auf das Schneidteil (3) stattfindet.

13. Verwendung einer Schneidvorrichtung (1) nach einem der Ansprüche 1 bis 10 zum Ablängen eines Kunststoff- oder Kunststoffverbundrohres.

## Claims

1. Cutting apparatus (1) for chipless cutting of material to be cut,
comprising a cutting part (3), which has a cutting edge (2), and a supporting part (4), which can be used as a rest for the material to be cut, wherein the cutting part (3) and the supporting part (4) are mounted such that they can be rotated with respect to one another about a rotational axis (5) and are configured to be rotated relative to one another about the rotational axis (5) between an open position (O) and a closed position (S), and
comprising a hand lever (6) and a ratchet mechanism (8), wherein the hand lever (6) is articulated on the supporting part (4) such that it can be pivoted about a pivot axis (7), and the ratchet mechanism (8) is configured to convert a to-and-fro movement of the hand lever (6) about the pivot axis (7) into a continuous rotational movement of the cutting part (3) in the direction of the closed position (S), wherein the ratchet mechanism (8) has a toothing system (9) and a drive pawl (10) which can be brought into an active position with the former, in order, via this, to bring about a force transmission from the hand lever (6) to the cutting part (3), and, furthermore,
comprising a coupling mechanism (14) which is configured to convert a singular pivoting movement of the hand lever (6) about the pivot axis (7) into a rotational movement of the cutting part (3) from the open position (O) into the closed position (S), wherein the coupling mechanism (14) has a separate coupling element (15), in order, via this, to bring about a force transmission from the hand lever (6) to the cutting part (3), wherein the coupling element (15) is articulated in each case via an articulation point (16; 17) on the cutting part (3) and on the hand lever (6), in order to bring about the force transmission from the hand lever (6) to the cutting part (3), and one of the articulation points (16, 17) is positionally variable, wherein the one articulation point (16) is situated in a transmission position (U), in order to bring about the force transmission from the hand lever (6) to the cutting part (3), and is configured to carry out an evading movement in response to a movement performed by the hand lever (6) or the cutting part (3), **characterized in that** the cutting apparatus (1) comprises a slotted guide (18) with a guide piece (19.1) and a guide element (19.2) which is guided thereon, wherein the one articulation point (16) is configured on the guide element (19.2), and wherein the guide piece (19.2) has a stop (20) for the guide element (19.2), in order to hold the one articulation point (16) in the transmission position (U), wherein, furthermore, the guide piece (19.2) has a guide portion (21) for a guided movement of the guide element (19.2), in order to permit the evading movement of the one articulation point (16).

2. Cutting apparatus according to Claim 1, wherein the cutting apparatus (1) is configured such that, in the case of the force transmission via the coupling element (15), the drive pawl (10) is present in an active position with respect to the toothing system (9) and is in a freewheel mode.

3. Cutting apparatus according to Claim 1 or 2, wherein the guide piece (19.1) has a further guide portion (22) which can be used as an inlet section, in order to move the guide element (19.2) against the stop (20).

4. Cutting apparatus according to one of the preceding claims, wherein the slotted guide (18) is integrated into the hand lever (6).

5. Cutting apparatus according to one of the preceding claims, wherein the ratchet mechanism (8) has a locking pawl (12) which can be moved into engagement against the toothing system (9), in order to block a movement of the cutting part (3) in the direction of the open position (O), and the restoring element (23) is provided which is configured to preferably move the locking pawl (12) counter to the force of the spring element (25.1) into an unlocked position (E) with regard to the toothing system (9), with the result that the cutting part (2) automatically carries out an opening movement into the open position (O) as a result of the force of a further spring element (25.2).

6. Cutting apparatus according to Claim 5, wherein the restoring element (23) is configured to be used as a guide (26) for the coupling element (15), in order, in the case of the opening movement of the cutting part (3), to guide an accompanying movement of the coupling element (15) in such a way that the one articulation point (16) is moved into the transmission position (U).

7. Cutting apparatus according to Claim 6, wherein the restoring element (23) has a projection (27) and is configured such that the projection (27) holds the locking pawl (12) in the unlocked position (E), wherein a surface portion of the projection (27) forms the guide (26) for the coupling element (15).

8. Cutting apparatus according to one of Claims 5 to 7, wherein the cutting apparatus (1) is configured to move the one articulation point (16) out of the transmission position (U), in order to change from the force transmission via the coupling element (15) to the force transmission via the drive pawl (10), by virtue of the drive pawl (10) and the locking pawl (12) being present in an active position against the toothing system (9), and the hand lever (6) being moved from an intermediate position (BZ1; BZ2; BZ3) between a starting position (A) and a deployed position (B) in the direction of the deployed position (A) or into the deployed position (A).

9. Cutting apparatus according to one of the preceding claims, wherein the pivot axis (7) is arranged in the region of an end (31) of the hand lever (6), wherein the one end (31) of the hand lever (6) faces the cutting part (3).

10. Cutting apparatus according to one of the preceding claims, wherein the cutting apparatus (1) is configured for chipless cutting of the material to be cut by way of knife action, and the cutting edge (2) is a knife blade.

11. Method for chipless cutting of material to be cut by means of a cutting apparatus (1) according to one of Claims 5 to 8, in the case of which method the restoring element (23) of the cutting apparatus (1) is actuated manually, as a result of which the locking pawl (12) of the cutting apparatus (1) is moved into the unlocked position (E) and, once again as a result, the cutting part (2) of the cutting apparatus (1) carries out an opening movement into the open position (O) by means of a spring force, and the coupling element (15) of the cutting apparatus (1) automatically carries out a movement accompanying the opening movement, wherein, as a result of the movement of the coupling element (15), the one articulation point (16) passes into the transmission position (U) and therefore the cutting apparatus (1) is present in a direct cutting mode, in which the force transmission from the hand lever (6) to the cutting part (3) takes place via the coupling element (15) .

12. Method for chipless cutting of material to be cut by means of a cutting apparatus (1) according to Claim 8, wherein the cutting apparatus (1) is in a direct cutting mode, in which a force transmission from the hand lever (6) to the cutting part (3) of the cutting apparatus (1) takes place via the coupling element (15) of the cutting apparatus (1), and the drive pawl (10) and the locking pawl (12) of the ratchet mechanism (8) of the cutting apparatus (1) are present in an active position against the toothing system (9), and the cutting part (3) has already moved in the direction of the closed position (S), as a result of which the hand lever (6) in situated in an intermediate position (BZ1; BZ2; BZ3) between the starting position (A) and the deployed position (B), wherein the method comprises the step that the hand lever (6) is pivoted from the intermediate position (BZ1; BZ2; BZ3) in the direction of the deployed position (A) or into the deployed position (A), as a result of which the one articulation point (16) is moved out of the transmission position (U), and therefore the cutting apparatus (1) is present in a ratchet cutting mode, in which the force transmission from the hand lever (6) to the cutting part (3) takes place via the drive pawl (10) and the toothing system (9).

13. Use of a cutting apparatus (1) according to one of Claims 1 to 10 for cutting a plastic or plastic composite pipe to length.

## Revendications

1. Dispositif de coupe (1) pour une coupe sans copeaux de produits à couper,
comprenant une pièce de coupe (3) présentant un tranchant (2) et une pièce d'appui (4) utilisable comme support pour le produit à couper, la pièce de coupe (3) et la pièce d'appui (4) étant montées à rotation l'une par rapport à l'autre autour d'un axe de rotation (5) et étant conçues pour être tournées l'une par rapport à l'autre autour de l'axe de rotation (5) entre une position d'ouverture (O) et une position de fermeture (S), et
comprenant un levier à main (6) et un mécanisme à cliquet (8), le levier à main (6) étant articulé sur la pièce de support (4) de manière à pouvoir pivoter autour d'un axe de pivotement (7) et le mécanisme à cliquet (8) étant conçu pour convertir un mouvement de va-et-vient du levier à main (6) autour de l'axe de pivotement (7) en un mouvement de rotation continu de la pièce de coupe (3) en direction de la position de fermeture (S), le mécanisme à cliquet (8) présentant une denture (9) et un cliquet d'entraînement (10) aptes à être amené en position active avec celle-ci, afin de provoquer par ce biais une transmission de force du levier à main (6) à la pièce de coupe (3), et en outre
comprenant un mécanisme de liaison (14) qui est conçu pour transformer un mouvement de pivotement unique du levier à main (6) autour de l'axe de pivotement (7) en un mouvement de rotation de la pièce de coupe (3) depuis la position d'ouverture (O) jusqu'à la position de fermeture (S), le mécanisme de liaison (14) présentant un élément de liaison séparé (15) afin de provoquer par son intermédiaire une transmission de force du levier à main (6) à la pièce de coupe (3), l'élément de liaison (15) étant relié par un point d'articulation (16 ; 17) respectivement à la pièce de coupe (3) et au levier à main (6), afin de provoquer la transmission de force du levier à main (6) à la pièce de coupe (3) et l'un des points d'articulation (16, 17) étant à position variable, l'un des points d'articulation (16) se trouvant dans une position de transmission (U), pour effectuer la transmission de force du levier à main (6) à la pièce de coupe (3) et étant agencé pour effectuer un mouvement de contournement sur un mouvement exercé par le levier à main (6) ou la pièce de coupe (3), **caractérisé en ce que** le dispositif de coupe (1) comprend un guide à coulisse (18) avec une coulisse (19.1) et un élément de guidage (19.2) guidé sur celui-ci, l'un des points d'articulation (16) étant formé sur l'élément de guidage (19.2) et la coulisse (19.2) comprenant une butée (20) pour l'élément de guidage (19.2) afin de maintenir le point d'articulation (16) dans la position de transmission (U), la coulisse (19.2) présentant en outre une section de guidage (21) pour un mouvement guidé de l'élément de guidage (19.2) afin de permettre le mouvement de contournement du point d'articulation (16).

2. Dispositif de coupe selon la revendication 1, le dispositif de coupe (1) étant agencé de manière à ce que, lors de la transmission de force par l'intermédiaire de l'élément de liaison (15), le cliquet d'entraînement (10) soit en position active contre la denture (9) et se trouve dans un mode de fonctionnement en roue libre.

3. Dispositif de coupe selon la revendication 1 ou la revendication 2, dans lequel la coulisse (19.1) présente une autre section de guidage (22) qui est apte à être utilisée en tant que section d'amenée pour déplacer l'élément de guidage (19.2) contre la butée (20).

4. Dispositif de coupe selon l'une des revendications précédentes, le guide de coulisse (18) étant intégré dans le levier à main (6).

5. Dispositif de coupe selon l'une des revendications précédentes, dans lequel le mécanisme à cliquet (8) présente un cliquet d'arrêt (12) apte à être amené en prise contre la denture (9), afin de bloquer un mouvement de la pièce de coupe (3) en direction de la position d'ouverture (O), et dans lequel il est prévu un élément de rappel (23) qui est agencé de manière à déplacer le cliquet d'arrêt (12), de préférence à l'encontre de la force d'un élément ressort (25.1) dans une position de déverrouillage (E) par rapport à la denture (9), de sorte que, sous l'effet de la force d'un autre élément de ressort (25.2), la pièce de coupe (2) exécute automatiquement un mouvement d'ouverture dans la position d'ouverture (O).

6. Dispositif de coupe selon la revendication 5, dans lequel l'élément de rappel (23) est agencé pour être utilisé en tant que guide (26) pour l'élément de liaison (15), afin de guider, lors du mouvement d'ouverture de la pièce de coupe (3), un mouvement de l'élément de liaison (15) qui l'accompagne, de telle sorte que l'un des points d'articulation (16) soit amené dans la position de transmission (U).

7. Dispositif de coupe selon la revendication 6, dans lequel l'élément de rappel (23) présente une saillie (27) et est agencé de façon que la saillie (27) maintienne le cliquet d'arrêt (12) dans la position de déverrouillage (E), une portion de surface de la saillie (27) formant le guide (26) pour l'élément de liaison (15).

8. Dispositif de coupe selon l'une des revendications 5 à 7, dans lequel le dispositif de coupe (1) est agencé pour amener l'un des points d'articulation (16) hors de la position de transmission (U) afin de passer de la transmission de force par l'élément de liaison (15) à la transmission de force par le cliquet d'entraînement (10), le cliquet d'entraînement (10) et le cliquet de blocage (12) étant en position active contre la denture (9) et le levier à main (6) étant déplacé d'une position intermédiaire (BZ1 ; BZ2 ; BZ3) entre une position de départ (A) et une position de déploiement (B) en direction de la position de déploiement (A) ou dans la position de déploiement (A).

9. Dispositif de coupe selon l'une des revendications précédentes, dans lequel l'axe de pivotement (7) est agencé au niveau d'une extrémité (31) du levier à main (6), ladite une extrémité (31) du levier à main (6) étant tournée vers la pièce de coupe (3).

10. Dispositif de coupe selon l'une des revendications précédentes, dans lequel le dispositif de coupe (1) est conçu pour couper le matériau à couper sans copeaux par l'action d'un couteau et le tranchant (2) est une lame de couteau.

11. Procédé de coupe sans copeaux d'un produit à couper au moyen d'un dispositif de coupe (1) selon l'une des revendications 5 à 8, dans lequel l'élément de rappel (23) du dispositif de coupe (1) est actionné manuellement, ce qui amène le cliquet d'arrêt (12) du dispositif de coupe (1) dans la position de déverrouillage (E) et, ce faisant, au moyen de la force d'un ressort, la pièce de coupe (2) du dispositif de coupe (1) effectue automatiquement un mouvement d'ouverture dans la position d'ouverture (O) et l'élément de liaison (15) du dispositif de coupe (1) effectue automatiquement un mouvement accompagnant le mouvement d'ouverture, le mouvement de l'élément de liaison (15) amenant ledit un point d'articulation (16) dans la position de transmission (U) et le dispositif de coupe (1) se trouvant ainsi dans un mode de coupe direct, dans lequel la transmission de force du levier à main (6) à la pièce de coupe (3) se fait par l'intermédiaire de l'élément de liaison (15).

12. Procédé de coupe sans copeaux de produits à couper au moyen d'un dispositif de coupe (1) selon la revendication 8, le dispositif de coupe (1) se trouvant dans un mode de coupe directe, dans lequel une transmission de force du levier à main (6) à la pièce de coupe (3) du dispositif de coupe (1) a lieu par l'intermédiaire de l'élément de liaison (15) du dispositif de coupe (1) et le cliquet d'entraînement (10) et le cliquet d'arrêt (12) du mécanisme à cliquet (8) du dispositif de coupe (1) sont en position active contre la denture (9), et la pièce de coupe (3) est déjà déplacée en direction de la position de fermeture (S), ce qui fait que le levier à main (6) se trouve dans une position intermédiaire (BZ1 ; BZ2 ; BZ3) entre la position de départ (A) et la position de déploiement (B), le procédé comprenant l'étape consistant à déplacer le levier à main (6) de la position intermédiaire (BZ1 ; BZ2 ; BZ3) en direction de la position de déploiement (A) ou dans la position de déploiement (A), ce qui fait que ledit un point d'articulation (16) est amené hors de la position de transmission (U) et que le dispositif de coupe (1) se trouve ainsi dans un mode de coupe à cliquet, dans lequel la transmission de force du levier à main (6) à la pièce de coupe (3) a lieu par l'intermédiaire du cliquet d'entraînement (10) et de la denture (9).

13. Utilisation d'un dispositif de coupe (1) selon l'une des revendications 1 à 10 pour la mise à longueur d'un tube en matière plastique ou en matière plastique composite.
